Europäisches Patentamt

European Patent Office

Office européen des brevets

(11) Veröffentlichungsnummer: **0 070 489**
A1

## (12) EUROPÄISCHE PATENTANMELDUNG

(21) Anmeldenummer: **82106214.8**

(22) Anmeldetag: **12.07.82**

(51) Int. Cl.³: **B 23 F 21/16**

(30) Priorität: **18.07.81 DE 3128563**

(43) Veröffentlichungstag der Anmeldung: **26.01.83**
**Patentblatt 83/4**

(84) Benannte Vertragsstaaten: **AT BE CH FR GB IT LI LU NL SE**

(71) Anmelder: **MDS Mannesmann Demag Sack GmbH, Wahlerstr. 2, D-4000 Düsseldorf 30 (DE)**

(72) Erfinder: **Langen, Hans, Am Püttkamp 26a, D-4000 Düsseldorf 12 (DE)**

(74) Vertreter: **Boecker, Carl Otto, Dipl.-Ing., Ensheimer Strasse 48, D-6670 St.Ingbert-Saar (DE)**

(54) **Hartmetallbestückter Abwälzfräser, sogenannter Schälwälzfräser.**

(57) Hartmetallbestückter Schälwälzfräser zum Bearbeiten der Zahnflanken von gehärteten Zahnrädern, die sich beim Härten verzogen haben, der zur Senkung der Anschaffungskosten nur aus einem einzigen Schraubengang (1) mit eingesetzten Hartmetallplatten (3, 4) besteht. Um trotzdem eine genaue Zahnform zu erhalten, die im Hinblick auf das erforderliche Schleifen der Zähne genügt, sind die seitlichen Schneidkanten der ein- und auslaufseitigen Hartmetallplatten (9, 6 bzw. 7, 10), d.h. diejenigen des ersten Zahnes (2a) und des letzten Zahnes (2b), in dem der Rotationsachse nächsten Bereich nach außen abgewinkelt.

S 660

### Hartmetallbestückter Abwälzfräser, sogenannter Schälwälzfräser

Die Erfindung betrifft einen hartmetallbestückten Abwälzfräser zum Bearbeiten der Zahnflanken von gehärteten Zahnrädern zur Beseitigung des Härteverzuges, dessen dem jeweiligen Eingriffswinkel der Verzahnung entsprechend verlaufenden, seitlich schneidenden Schneidkanten der Hartmetallplatten mit gegenüber der Radialen negativem Spanflächenwinkel an den schraubengangförmig angeordneten Zähnen vorgesehen sind. Solche als Schälwälzfräser bezeichneten Abwälzfräser werden mit großem Erfolg zum Egalisieren des Härteverzuges der Zähne von gehärteten Zahnrädern eingesetzt, der im Bereich von einigen Zehntel mm liegen kann und Mehrkosten beim Schleifen der Zahnflanken verursacht, die die Kosten beim Schleifen von ungehärteten Zahnrädern übersteigen. Unter Umständen kann das Schleifen von gehärteten Zahnrädern sogar wegfallen.

Auf dem Markt sind solche Schälwälzfräser als Stollenfräser, als Fräser mit flach auf der Frontseite der Zähne befestigten Hartmetallplatten, oder als solche, bei denen die Hartmetallplatten als Wendeschneidplatten in seitliche Sitze der Zahnflanken hochkant, d.h. in tangentialer Anordnung, eingesetzt sind, was einen mehrteiligen Aufbau des Fräserkörpers erfordert.

Alle bekannten Schälwälzfräser haben mehr als einen Schraubengang von Zähnen (FETTE Technische Nachrichten 256), um eine dem
Eingriffswinkel entsprechende Abwicklung der Schneidkanten über
alle Zahnflanken sicherzustellen. Hierdurch wird das Werkzeug,
das eigentlich nur eine Art Nacharbeit verrichten soll, so teuer
wie ein Schrupp-Abwälzfräser mit Hartmetallbestückung für
schwerste Schneidarbeit.

Der Erfindung liegt die Aufgabe zugrunde, den Zwang zu mehreren
Schraubengängen bei einem Schälwälzfräser zu beseitigen, um dadurch das Werkzeug zu vereinfachen und seinen Preis zu mindern
eingedenk der Tatsache, daß es zum Egalisieren des Härteverzuges
von einigen Zehntel mm bis etwa 1,5 mm hinsichtlich der Schneidleistung nur wenig beansprucht ist. Die Lösung dieser Aufgabe
besteht gemäß der Erfindung darin, daß der Fräser aus einem einzigen Schraubengang der die Hartmetallplatten tragenden Zähne
besteht, und daß die Schneidkanten der ein- und auslaufseitigen
Hartmetallplatten in dem der Rotationsachse nächsten Bereich nach
außen abgewinkelt verlaufen. Unter den ein- und auslaufseitigen
Hartmetallplatten sind quasi der erste und der letzte "Zahn" eines
eingängigen Zahnkranzes zu verstehen, bei denen die eine Schneidkante rechts- und die andere Schneidkante linksschneidend ist,
oder umgekehrt. Der abgewinkelte Verlauf dieser Schneidkanten
ersetzt die wegen des Wegfalls von mehreren Schraubengängen des
Fräsers fehlende, korrekte Abwicklung der Zähne in der Ein- und
Auslaufphase, durch die bisher allein die Evolvente bzw. die
vorschriftsmäßige Zahnform des nachgearbeiteten Zahnrades erhalten werden konnte, und zwar wenigstens soweit, nämlich im
Bereich von Hundertstel mm, daß dieser Rest von Ungenauigkeit
tragbar ist oder beim anschließenden Schleifen egalisiert wird.
Insoweit ist der Schälwälzfräser gemäß der Erfindung vornehmlich
zum Nacharbeiten von gehärteten Zahnrädern anwendbar, die sowieso
noch geschliffen werden müssen. Durch den mit dem korrigierten,
nämlich abgewinkelten Schneidkantenverlauf der ein und auslaufseitigen Hartmetallplatten einhergehenden einzigen Schraubengang
des neuen Schälwälzfräsers werden die Herstellkosten desselben
erheblich gesenkt und seiner niedrigen Schneidleistung angemessen.

Das Ausmaß der Abwinklung der Schneidkanten gemäß der Erfindung ist von mehreren Faktoren abhängig, insbesondere von der Zähnezahl des zu bearbeitenden Zahnrades und der Korrektur der Verzahnung . Bei großen Zähnezahlen und demgemäß einem zahnstangenähnlichen Profil der Zähne kann die Abwinklung nach außen sehr klein werden, z.B. 0,5$^{o}$, wogegen die Abwinklung anders bis zu einigen Graden betragen kann.

Es versteht sich, daß die Erfindung an den verschiedenen, auf dem Markt befindlichen Schälwälzfräser-Bauarten angewendet werden kann (Patentanspruch 2 und 3). Auch ist es gleichgültig, ob der Schraubengang der Zähne aus einer einstückigen gewundenen Zahnscheibe (DE-OS 27 00 525) oder aus einer Mehrzahl von Segmenten besteht, die durch radiale Schrauben mit einem Tragdorn verbunden sind.

Da ein Schälwälzfräser nur die Zahnflanken zu bearbeiten hat, kann jeder Zahn mit rechts und links seitenschneidenden Hartmetallplatten versehen sein. Wenn das Zahnrad vor dem Härten mit einem Protuberanzfräser vorgefräst worden ist, können die Hartmetallplatten frei von kopfschneidenden Schneidkanten sein.

In der Zeichnung ist ein bevorzugtes Ausführungsbeispiel eines Schälwälzfräsers gemäß der Erfindung dargestellt, und zwar zeigen

Fig. 1    eine Seitenansicht,

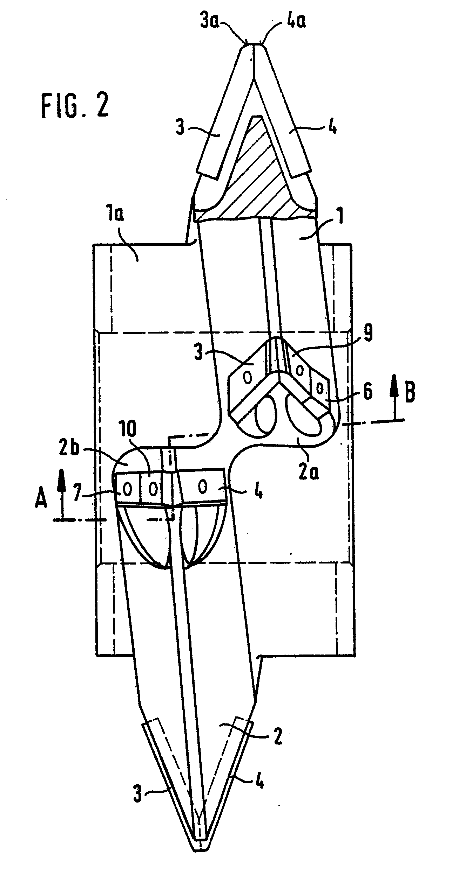

Fig. 2    eine Vorderansicht,

Fig. 3    eine Ansicht "A" in Fig. 2, gegen den auslaufseitigen Zahn, und

Fig. 4    eine Ansicht "B" in Fig. 2, gegen den einlaufseitigen Zahn.

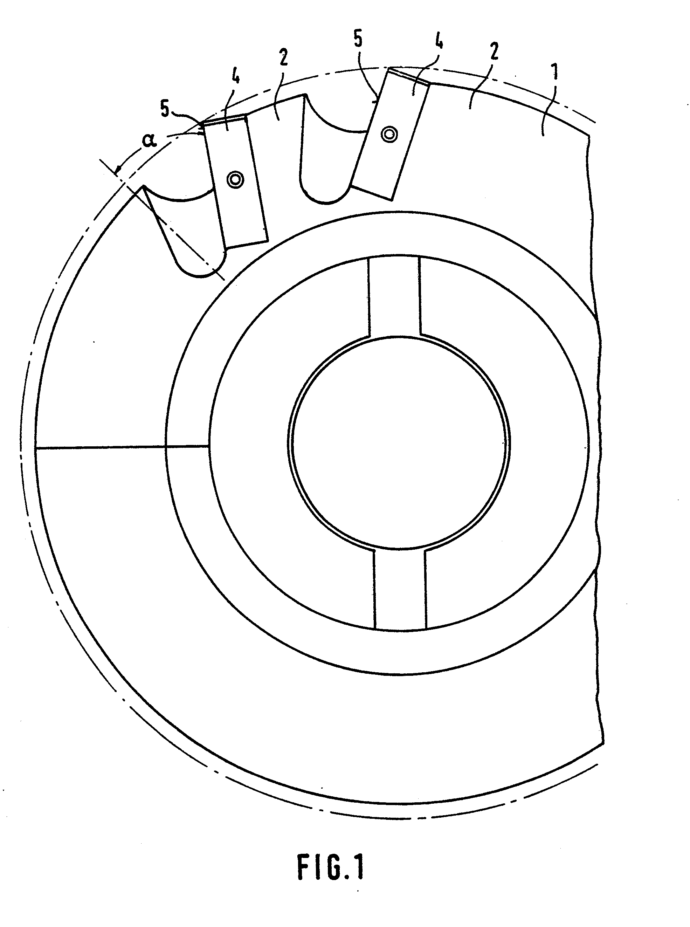

Der Schälwälzfräser besteht aus einer einzigen, schraubenförmig gewundenen Zahnscheibe 1, die mit der Nabe 1a einstückig ist. Der einzige Schraubengang trägt Zähne 2, in deren seitliche Sitze Hartmetallplatten 3, 4 hochkant, d.h. in tangentialer Anordnung, eingesetzt sind. Wie Fig. 1 zeigt, sind die seitlich schneidenden Schneidkanten 5 der Hartmetallplatten mit einem gegenüber der Radialen stark negativem Spanflächenwinkel $\alpha$ von ca. 30$^o$ angeordnet. Jeder Zahn trägt im Ausführungsbeispiel rechts und links je eine als Wendeschneidplatte ausgebildete Hartmetallplatte mit Kopfschneiden 3a, 4a jedoch können die Kopfschneiden auch entfallen, wenn das nachzuarbeitende Zahnrad mit einem Protuberanzfräser vorgefräst worden ist.

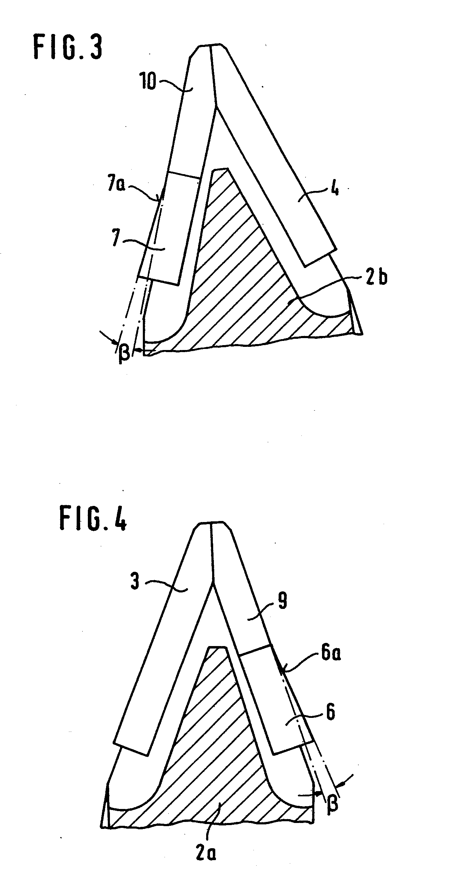

Der Schälwälzfräser gemäß der Erfindung kann deshalb nur einen Schraubengang haben, weil sowohl der einlaufende Zahn 2a (Fig. 4) als auch der auslaufende Zahn 2b (Fig. 3) im Anschluß an die rechts- bzw. linksschneidenden verkürzten Wendeschneidplatten 9, 10 in Richtung auf die Rotationsachse 8 als getrennte, trapezförmige Wendeschneidplatten 6, 7 fortgesetzt sind, und weil die Schneidkanten 6a bzw. 7a dieser trapezförmigen Wendeschneidplatten gegenüber der Ebene der Schneidkanten der verkürzten Wendeschneidplatten 9, 10 um einen Winkel $\beta$ nach außen abgewinkelt verlaufen. Diese Schneidkantenkorrektur ermöglicht die Ausführung des Schäl-Wälzfräsers mit nur einem Schraubengang, da die nach außen abgewinkelten Schneidkanten 6a und 7a der Wendeschneidplatten 6 und 7 das Material von den Zahnflanken abtragen, das wegen fehlender Abwicklung (fehlend gegenüber der Wirkungsweise eines Abwälzfräsers mit mehreren Schraubengängen) stehengeblieben ist, zumindest soweit, daß es beim nachträglichen Schleifen des Zahnrades egalisiert wird.

0070489

S 660


<u>Patentansprüche</u>

1. Hartmetallbestückter Abwälzfräser zum Bearbeiten der Zahnflanken von gehärteten Zahnrädern zur Beseitigung des Härteverzuges, sogenannter Schälwälzfräser, dessen dem jeweiligen
Eingriffswinkel der Verzahnung entsprechend verlaufenden,
seitlich schneidenden Schneidkanten der Hartmetallplatten
mit gegenüber der Radialen negativem Spanflächenwinkel an den
schraubengangförmig angeordneten Zähnen vorgesehen sind,
dadurch gekennzeichnet,
daß der Fräser aus einem einzigen Schraubengang der die
Hartmetallplatten (3, 4) tragenden Zähne (2) besteht, und
daß die Schneidkanten der ein- und auslaufseitigen Hartmetallplatten (3, 4) in dem der Rotationsachse nächsten
Bereich nach außen abgewinkelt (Winkel $\beta$ ) verlaufen.


2. Abwälzfräser nach Anspruch 1, dadurch gekennzeichnet,
daß die Hartmetallplatten flach auf der Frontfläche der
Zähne (2) befestigt sind.


3. Abwälzfräser nach Anspruch 1, dadurch gekennzeichnet,
daß die Hartmetallplatten (3, 4, 6, 7, 9, 10) als Wendeschneidplatten in seitliche Sitze der Zahnflanken hochkant,
d.h. in tangentialer Anordnung eingesetzt sind.

0070489

4. Abwälzfräser nach Anspruch 1, dadurch gekennzeichnet, daß der Schraubengang der Zähne aus einer einstückigen Zahnscheibe (2) besteht.

5. Abwälzfräser nach Anspruch 1, dadurch gekennzeichnet, daß der Schraubengang der Zähne (2) aus einer Mehrzahl von Segmenten besteht, die durch radiale Schrauben mit einem Tragdorn verbunden sind.

6. Abwälzfräser nach einem oder mehreren der vorhergehenden Ansprüche, dadurch gekennzeichnet, daß jeder Zahn (2) mit rechts und links seitenschneidenden Hartmetallplatten (3, 4) versehen ist.

7. Abwälzfräser nach Anspruch 6, dadurch gekennzeichnet, daß die Hartmetallplatten frei von kopfschneidenden Schneidkanten sind.

FIG.1

FIG. 2

**FIG.3**

**FIG.4**

Europäisches Patentamt

**EUROPÄISCHER RECHERCHENBERICHT**

0070489

Nummer der Anmeldung

EP 82 10 6214.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 811 932 (GARDNER-DENVER CO.)<br>* Anspruch 1; Seiten 8, 9, 13; Fig. 2, 3 *<br>-- | 1,4 |
| X | DE - A1 - 2 749 372 (SACK GMBH)<br>* gesamtes Dokument *<br>-- | 1 |
| D,A | DE - A1 - 2 700 525 (SACK GMBH)<br>* Anspruch 1; Fig. 1, 2 *<br>-- | 2,3,6 |
| A | DD - A - 147 635 (VEB KOMBINAT GETRIEBE UND KUPPLUNGEN)<br>* Seite 3; Fig. *<br>---- | 1 |

**KLASSIFIKATION DER ANMELDUNG (Int. Cl.³)**

B 23 F 21/16

**RECHERCHIERTE SACHGEBIETE (Int. Cl.³)**

B 23 C 5/00

B 23 F 21/16

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-10-1982 | MARTIN |

EPA form 1503.1   06.78